# EUROPEAN PATENT APPLICATION

(11) **EP 0 913 422 A2**
(43) Date of publication of application: **06.05.1999**
(21) Application number: 98308326.2
(22) Date of filing: 13.10.1998
(51) Int. Cl.: C08J 5/22

(54) **Ion exchange membrane**

(30) Priority: 03.11.1997 US 963292
(71) Applicant: Pall Corporation, East Hills, New York 11548 (US)
(72) Inventor: Sipsas, Ioannis P., Forest Hills, New-York 11375 (US); Lee, Joseph Y., South Setauket, New-York 11720 (US); Fried, Robert A., Medford, New-York 11763 (US); Adiletta, Joseph G., Thompson, Connecticut 06277 (US)
(74) Representative: Knott, Stephen Gilbert

(57) **Abstract**

The present invention is directed to an ion exchange membrane comprising a integrally reinforced polymeric film grafted with an aromatic moiety having at least one aromatic ring substituted with an ion exchange group. The ion exchange group can be an anion exchange group or a cation exchange group.

The present invention is further directed to a method for preparing an ion exchange membrane which involves contacting an integrally reinforced polymeric film with an aromatic monomer substituted with at least one aromatic ring and grafting the aromatic monomer to the integrally reinforced film. An ion exchange group is then introduced to the aromatic ring to provide an ion exchange membrane. Optionally, the aromatic monomer may possess an aromatic ring substituted with ion exchange group or derivative thereof, thereby eliminating the step of introducing the ion exchange group to the grafted species.

The present invention is further directed to a method for treating a fluid comprising contacting a fluid with the ion exchange membrane of the present invention. The present invention is further directed to devices which comprise the membrane of the present invention.

## Description

### TECHNICAL FIELD OF THE INVENTION

The present invention is directed to ion exchange membranes and methods of preparing and using such membranes.

### BACKGROUND OF THE INVENTION

Ion exchange membranes are widely used in processes requiring the separation of two or more species based on charge. Such processes include electrodialysis, electrolysis, fuel cell-based electricity production, ultrafiltration, reverse osmosis, piezodialysis, diffusion dialysis and pervaporation. While the ion exchange membranes employed in these processes are tailored for the specific needs of each application, certain membrane attributes are almost always desirable, including resistance to chemical degradation (e.g., hydrolysis and oxidation) and mechanical strength (e.g., dimensional stability in a range of chemical environments).

These attributes are especially important for electrodialysis membranes, which must also possess a variety of other properties, including very low electrical resistances, high current efficiencies (as measured by their ion transport numbers), and high process efficiencies (provided by low levels of electrical water transport and back-diffusion). See Kirk-Othmer's Encyclopedia of Chemical Technology, 3^{rd} ed., vol. 8, pp. 728-29 (1979).

The preparation of a single membrane that contains all of these qualities has been an elusive goal. Electrodialysis membranes are typically fashioned from simple polymeric films that have been modified in two ways. First, they are derivatized with ion exchange groups such as sulfonates (for cation exchange) or quaternary ammonium salts (for anion exchange); and second, to improve their physical strength, the films are crosslinked or reinforced with, for example, polymeric fibers, cloths, films, etc.

Exogenous reinforcement generally provides better results than crosslinking with respect to the mechanical stability of the membrane. However, such reinforcement can increase the electrical resistance of the reinforced film as compared to the unmodified membrane because of the substantial amount of nonconductive polymeric material that must be introduced to the conductive matrix in order to provide the necessary strength improvements. U.S. Patent 4,997,567 (Messalem et al.) provides an example of a reinforced ion exchange membrane wherein this patchwork of nonconductive and conductive polymeric materials is especially evident.

While reinforcement has an impact on both the mechanical strength and electrical resistance of the membrane, the chemical composition of the polymeric film is the primary determinant of its chemical stability (e.g., its susceptibility to oxidative and/or hydrolytic degradation). The film also provides sites for attachment of the crucial ionic functional groups (e.g., sulfonates, carboxylates, and quaternary amines) of the ion exchange membrane. This presents a dilemma to the membrane scientist, since the film must be reactive enough to introduce these ionic groups, but also inert enough to resist degradation in challenging chemical environments. Thus, ion exchange membranes are generally prepared from materials that have sub-optimal chemical resistance properties. For example, U.S. Patent 5,643,968 (Andreola et al.) describes a polyarylsulfone film that is derivatized with ionic functionality to form an ion exchange membrane. The chemical resistance of this membrane is not ideal because although polysulfones are more resistant to chemical degradation than most other films (e.g., polystyrenes, polyamides, polyesters, polyimides, polyethers, etc.), they are still susceptible to base-promoted oxidation and hydrolysis, thus limiting the range of their potential applications.

Attempts have been made to avoid having to compromise chemical stability for derivation ease by removing the derivation step in membrane formation. In one such method, membranes are manufactured by fusing ion exchange resins, which already contain the necessary ionic functionality, to reinforcing support material. Ion exchange resins have also been applied to support materials by film coating or laminating processes. This obviates the need to introduce this functionality later, but the resulting membranes have a heterogeneous distribution of ionic groups, and typically possess inferior mechanical and electrical properties when compared to the homogenous membranes prepared using derivation methods. A recent example of a heterogeneous ion exchange membrane can be found in U.S. Patent 5,346,924 (Giuffrida et al.).

Another method to avoid the derivation step in ion exchange membrane manufacturing sometimes is used to construct certain perfluorinated cation exchange membranes. The membranes are made by co-polymerizing tetrafluoroethylene and perfluorosulfonyl ethoxyvinyl ether monomers, and then hydrolyzing the fluorosulfonyl groups to form sulfonic acids. This manufacturing process is difficult, expensive, and limited in scope, since it requires the synthesis of protected ionic precursor monomers that are compatible with the copolymerization conditions. Furthermore, a compromise must be made with respect to the number of ionic groups incorporated within the membrane, since too many will cause an undesirable decrease in permselectivity, while too few will cause an unacceptably high electrical resistance. The introduction of reinforcing materials, such as fluoropolymeric fabrics, which are needed to improve the strength and dimensional stability of membranes such as perfluorinated ionomeric membranes sold under the trademark Nafion®, can increase the electrical resistance of the membranes still further. See R.E. Kesting's Synthetic Polymeric Membranes, p. 164 (1985).

The preparation of ion exchange membranes by graft copolymerization is described in Tsuneda et al., *Journal of the Electrochemical Society, 142,* 3659-63 (1995), which describes an ion exchange membrane prepared by radiation graft copolymerization of sodium styrene sulfonate and acrylic acid onto the polyethylene film to form cation exchange membranes, or 2-hydoxyethyl methacrylate and vinyl benzyl trimethyl ammonium chloride to produce anion exchange membranes. While this method can be used to impart ion exchange properties to the surface of a polyethylene membrane, the method is quite limited in that it requires copolymerization with a hydrophilic acrylate comonomer. Further, the resulting membranes exhibited significant swelling in water, poor dimensional stability, and poor permselectivity, particularly with respect to the cation exchange membranes. Oxidative stability in these polyethylene based membranes is also questionable.

The graft modification of polytetrafluoroethylene is described in U.S. Patent 4,113,922, which describes a fuel cell membrane obtained by radiation grafting fluorinated styrene monomers onto a polytetrafluoroethylene backbone. Although styrene-type monomers can be effectively grafted to an oxidatively stable polytetrafluoroethylene support by this method, the membranes nonetheless suffer from the inherent dimensional instability of the polytetrafluoroethylene support. Incorporation of backings or supportive layers to the membranes would be detrimental to the electrical properties of the membrane while only modestly increasing the dimensional stability.

In view of the foregoing limitations, there exists a need for an improved, highly stable ion exchange membrane. The membranes should possess high chemical and dimensional stability, low electrical resistance, high current and process efficiency, and high permselectivity. The present invention provides such membranes and uses thereof. These and other advantages of the present invention, as well as additional inventive features, will be apparent from the description of the invention provided herein.

### BRIEF SUMMARY OF THE INVENTION

The present invention provides an ion exchange membrane comprising an integrally reinforced polymeric film grafted with an aromatic moiety having at least one aromatic ring substituted with an ion exchange group.

The present invention also provides a method for preparing an ion exchange membrane wherein an integrally reinforced polymeric film is contacted with an aromatic monomer having at least one aromatic ring and the film is subjected to conditions which cause the aromatic monomer to form a graft with the integrally reinforced polymeric film. An ion exchange group is introduced to the aromatic ring to provide the ion exchange membrane of the present invention.

The present invention further provides a method for preparing an ion exchange membrane wherein an integrally reinforced polymeric film is contacted with an aromatic monomer having an aromatic ring substituted with an ion exchange group and the film is subjected to conditions which cause the aromatic monomer to form a graft with the integrally reinforced polymeric film.

The present invention further provides a method for treating a fluid which involves contacting a fluid with an ion exchange membrane of the present invention.

The present invention further provides an electrodialysis device comprising a housing and an ion exchange membrane of the present invention, as well as an ion exchange device comprising two or more ion exchange membranes, which can be the same or different, of the present invention.

### DETAILED DESCRIPTION OF THE INVENTION

The present invention provides an ion exchange membrane comprising an integrally reinforced polymeric film grafted with an aromatic moiety having at least one aromatic ring substituted with an ion exchange group. The ion exchange membrane of the present invention utilizes an integrally reinforced polymeric film to provide the skeletal framework and desirable bulk membrane properties, such as, for example, dimensional stability, oxidative stability, and tensile strength. The film can be derived from any suitable bulk polymer. Preferably, the bulk polymer is a polymer which is stable to oxidation and is chemically compatible with an aromatic moiety grafted thereto. Preferred bulk polymers include polyolefins, which are more preferably fluorinated polyolefins. In a highly preferred embodiment, the bulk polymer is polytetrafluoroethylene (PTFE). In another highly preferred embodiment, the bulk polymer is poly(fluoroethylene-propylene) (FEP).

The ion exchange membrane of the present invention can have any suitable physical properties and be in any suitable configuration. The ion exchange membrane preferably is substantially non-porous, in that the membrane is not "porous" or "microporous" as commonly referred to in the art. Although the ion exchange membrane of the present invention preferably is substantially non-porous, the membrane nonetheless desirably has a pore rating, albeit of much smaller dimension, and is permeable to fluids and to ionic transport. Thus, for example, certain substances, e.g., gases and liquids, of suitable molecular dimensions may pass through the membrane. Generally, a microporous film has a pore rating of from about 0.01 µm to about 10 µm. In contrast, the ion exchange membrane of the present invention preferably has a pore rating of less than about 200 Å. More preferably, the pore rating is less than about 100 Å, most preferably less than about 50 Å. Optimally, the ion exchange membrane of the present invention has a pore rating of about 25 Å or less.

The ion exchange membrane of the present invention utilizes a polymeric film which is integrally reinforced. The term "integrally reinforced" as used herein does not refer to a membrane backing or membrane support for the film, such as, for example, a paper backing. Rather, the term "integrally reinforced" as used herein refers to polymeric films possessing reinforcing materials integrated within (i.e., integral to) the structure of the film polymer. The film can be reinforced by any suitable reinforcement means such as, for example, by fibers, meshes and foils. The suitable reinforcing means can be derived from any suitable materials which include, for example, polymeric and metallic materials. Thus, the film can be reinforced with a metallic mesh or foil, a polymeric mesh, or polymeric fibers. Preferably, the film is reinforced with fibers, particularly polymeric fibers.

Fiber reinforced films are known in the art and can be obtained by a variety of methods. The reinforcing fibers can comprise woven or nonwoven fibers within the film structure. Typically, fiber reinforced membranes are prepared via casting or coating methods such as, for example, casting a film from a mixture of the bulk polymer and a nonwoven fibrous material, or coating a woven fibrous network with the bulk polymer.

The reinforcing fibers can be derived from any suitable material. Suitable reinforcing fibers include, for example, aromatic polyamide (aramid) fibers such as poly(1,3-phenyleneisophthalamide) fibers marketed under the trademark Nomex®, and poly(1,4-phenyleneterephthalamide) fibers marketed under the trademark Kevlar®. Other suitable reinforcing fibers include, for example, aromatic polyamide-imides, which can be generally defined as synthetic linear macromolecules made from aromatic groups joined by amide linkages, in which at least 85% of the amide linkages are joined directly to two aromatic rings wherein imide groups may be substituted for up to about 50% of the amide groups. Suitable reinforcing fibers also include, for example, polyolefin fibers, preferably fluorinated polyolefin fibers, more preferably PTFE fibers. Suitable reinforcing fibers further include carbon fibers. Of course, reinforcing fibers also can be derived from suitable blended polymers or copolymers.

In one preferred embodiment of the present invention, the integrally reinforced polymeric film is an integrally fiber reinforced PTFE film, which is preferably an aromatic polyamide woven fiber reinforced PTFE cast film. In another preferred embodiment, the integrally reinforced polymeric film is an integrally fiber reinforced FEP film. Preferred integrally fiber reinforced FEP films include, for example, PTFE woven fiber reinforced FEP cast films, poly(1,3-phenyleneisophthalamide) woven fiber reinforced FEP films, and poly(1,4-phenyleneterephthalamide/poly(1,3-phenyleneisophthalamide) blended woven fiber reinforced FEP films. In yet another preferred embodiment, the integrally reinforced polymeric film is a carbon nonwoven fiber reinforced FEP film.

The ion exchange membrane of the present invention is grafted with an aromatic moiety having at least one aromatic ring substituted with an ion exchange group. The aromatic moiety can be any suitable organic substance, possessing at least one aromatic ring, which is capable of maintaining a stable and homogeneous graft with the reinforced polymeric film. Unlike a coating or a blend, the aromatic moiety of the ion exchange membrane of the present invention is grafted to the reinforced polymeric film, and thereby maintains covalent bonding with the reinforced polymeric film. Further, the aromatic moiety desirably is grafted homogeneously throughout the entire surface area of the film, including any interior surfaces of the film, without any significant variation throughout the film. Preferably, the aromatic moiety is a grafted species derived from a vinyl monomer substituted with at least one aromatic ring. The aromatic ring can be any carbocyclic or heterocyclic ring or ring system having "aromaticity" as commonly known in the art. The aromatic moiety can possess more than one type of aromatic ring. Suitable aromatic rings include carbocyclic aromatic rings such as, for example, benzene, naphthalene, anthracene, biphenyl, biphenyl ether, biphenylsulfone, and heterocyclic rings (e.g., oxazole, thiazole, thiophene, pyridine, benzothiazole, quinoline, and the like). The aromatic ring preferably is a carbocyclic aromatic ring, particularly a benzene ring. More preferably, the aromatic moiety is a graft derived from a vinyl benzene monomer. In one preferred embodiment, the aromatic moiety is a graft derived from styrene. In another preferred embodiment, the aromatic moiety is a graft derived from (trifluorovinyl)benzene, which can be prepared synthetically by the methods described in U.S. Patent 5,602,185.

The aromatic ring of the aromatic moiety is substituted with at least one ion exchange group. A suitable ion exchange group includes any functional group or derivative thereof which has an affinity for ions. The ion exchange group can be a cation exchange group or an anion exchange group. Suitable cation exchange groups include any suitable functional groups having an affinity for cations such as acids, for example, sulfonic acids, carboxylic acids, and phosphonic acids, and suitable derivatives and salts thereof, which are attached to the aromatic ring directly or via suitable organic linkages. Suitable anion exchange groups include any suitable functional groups having an affinity for anions such as, for example, ammonium salts. Ammonium salts include protonated amines and quaternary ammonium salts, and can be attached to the aromatic ring directly or via suitable organic linkages.

In one preferred embodiment, the ion exchange membrane of the present invention is a cation exchange membrane comprising an integrally reinforced polymeric film grafted with an aromatic moiety, wherein the aromatic ring is substituted with a sulfonic acid. In another preferred embodiment, the cation exchange membrane of the present invention comprises an integrally reinforced polymeric film grafted with an aromatic moiety, wherein the aromatic ring is substituted with a carboxylic acid. In a further preferred embodiment, the cation exchange membrane of the present invention comprises an integrally reinforced polymeric film grafted with an aromatic moiety, wherein the aromatic ring is substituted with a phosphonic acid. In yet another preferred embodiment, the ion exchange membrane of the present invention is an anion exchange membrane comprising an integrally reinforced polymeric film grafted with an aromatic moiety having at least one aromatic ring substituted with an alkyl quaternary ammonium salt, which is preferably a (trialkylammonium)methyl group and more preferably a (triethylammonium)methyl group.

The present invention further provides a method of preparing an ion exchange membrane which comprises contacting an integrally reinforced polymeric film with an aromatic monomer having an aromatic ring and subjecting the integrally reinforced polymeric film to conditions wherein the aromatic monomer undergoes graft bonding to the integrally reinforced polymeric film. The ion exchange membrane is then formed by introducing an ion exchange group to at least one aromatic ring of the resulting grafted aromatic moiety.

The integrally reinforced polymeric film can be any suitable polymeric film as described herein with respect to the discussion of the present inventive ion exchange membrane. Thus, the film can be derived from any suitable bulk polymer. Preferably, the bulk polymer is a polyolefin, which is more preferably a fluorinated polyolefin. In a preferred embodiment, the bulk polymer is polytetrafluoroethylene (PTFE). In another preferred embodiment, the bulk polymer is poly(fluoroethylenepropylene) (FEP). The polymeric film is an integrally reinforced polymeric film as described herein. The integrally reinforced polymeric film can be reinforced by any suitable means, such as those described herein. In a preferred embodiment, the integrally reinforced polymeric film of the present inventive method is an integrally fiber reinforced film. The reinforcing fibers can be woven or nonwoven within the film structure. The reinforcing fibers may be derived from any suitable materials such as, for example, aromatic polyamides. Suitable aromatic polyamide fibers include, for example, poly(1,3-phenyleneisophthalamide) and poly(1,4-phenyleneterephthalamide) fibers as described herein. Other suitable aramid reinforcing fibers include fibers such as, for example, aromatic polyamide-imides as described herein. Suitable reinforcing fibers also include polyolefin fibers, which are preferably fluorinated polyolefin fibers, more preferably PTFE fibers. Suitable reinforcing fibers further include carbon fibers. Of course, reinforcing fibers also can be derived from suitable blended polymers or copolymers.

In one preferred embodiment of the present invention, the integrally reinforced polymeric film is an integrally fiber reinforced PTFE film, which is preferably an aromatic polyamide woven fiber reinforced PTFE cast film. In another preferred embodiment, the integrally reinforced polymeric film is an integrally fiber reinforced FEP film. Preferred integrally reinforced FEP films include, for example, PTFE woven fiber reinforced FEP cast films, poly(1,3-phenyleneisophthalamide) woven fiber reinforced FEP films, and poly(l,3-phenyleneisophthalamide)/poly(1,4-phenyleneterephthalamide) blended woven fiber reinforced FEP films. In yet another preferred embodiment, the integrally reinforced polymeric film is a carbon nonwoven fiber reinforced FEP film.

The aromatic monomer can be any suitable aromatic monomer which can be grafted to the polymeric film and which possesses an aromatic ring onto which an ion exchange group can be introduced. The aromatic ring can be any carbocyclic or heterocyclic ring or ring system having aromaticity as described herein. Suitable aromatic rings include carbocyclic aromatic rings such as, for example, benzene, naphthalene, anthracene, biphenyl, biphenyl ether, biphenylsulfone, and heterocyclic aromatic rings (e.g., oxazole, thiazole, thiophene, pyridine, benzothiazole, quinoline, and the like). The aromatic ring preferably is a carbocyclic aromatic ring, particularly a benzene ring. More preferably, the aromatic monomer is a vinyl aryl monomer such as, for example, a vinylbenzene, a vinylnaphthalene (e.g., 2-vinylnaphthalene), a vinylbiphenyl, a vinylbiphenyl ether, or a derivative thereof. Most preferably, the aromatic monomer is a vinylbenzene such as, for example, styrene, a divinylbenzene, a substituted styrene (e.g., α-methylstyrene, trans-β-methylstyrene, or (trifluororvinyl)benzene), or a derivative thereof (e.g., vinyl benzyl chloride).

After contacting the integrally reinforced polymeric film with the aromatic monomer, the integrally reinforced polymeric film is subjected to conditions wherein the aromatic monomer undergoes graft bonding with the integrally reinforced polymeric film. Suitable conditions for grafting the aromatic monomer to the integrally reinforced polymeric film includes any number of grafting conditions known to those of ordinary skill in the art such as, for example, radiation grafting, pre-irradiation grafting, post irradiation grafting, ultraviolet radiation, thermal grafting, electron-beam grafting, and plasma grafting. Preferably, the grafting conditions of the present inventive method involve grafting by radiation, which is more preferably gamma radiation. In a preferred embodiment, the gamma radiation is derived from a cobalt source. The gamma radiation can be of any suitable intensity, preferably in the range from about 500 rad/hr to about 50,000 rad/hr, more preferably from about 2000 rad/hr to about 12,000 rad/hr, which is more preferably from about 4000 rad/hr to about 10,000 rad/hr. Reaction times are generally from about 1 hr to about 400 hr, preferably from about 24 hr to about 220 hr, more preferably from about 72 hr to about 200 hr. Any suitable temperature can be employed in the present inventive method, preferably from about 20 °C to about 50 °C.

After the aromatic monomer is grafted to the integrally reinforced polymeric film, an ion exchange group is introduced to the aromatic ring to provide an ion exchange membrane. Any suitable organic reaction methodology can be utilized to introduce an ion exchange group to an aromatic ring. For example, a cation exchange group can be introduced to the aromatic ring by electrophilic substitution methods such as, for example, chlorosulfonation with chlorosulfonic acid followed by aqueous hydrolysis of the resulting sulfonyl chloride. An anion exchange group also can be introduced to an aromatic ring via electrophilic substitution methods such as, for example, nitration of the aromatic ring, reduction of the resulting nitro group to an amine, and then quaternization of the amine with a suitable alkylating agent to provide a quaternary ammonium anion exchange group. Of course, the aromatic monomer can be substituted with a synthon (i.e., synthetic equivalent) of an ion exchange group such as, for example, a carboxylate ester (which can be hydrolyzed to provide a carboxylic acid), a sulfonate ester (which can be hydrolyzed to provide sulfonic acid ion exchange group), or a nitro group (which can be reduced and quaternized to an amine to provide a quaternary ammonium salt).

An ion exchange group can be introduced via any suitable technique, e.g., displacement chemistry. For example, if the aromatic monomer utilized in the present inventive method is a vinylaryl species with a displaceable halide such as, for example, a vinylbenzyl halide (e.g., vinylbenzyl chloride), then an ion exchange group can be introduced by displacement of the displaceable halide with a suitable nucleophile. For example, a cation exchange group can be introduced to the aromatic ring by displacement of the displaceable halide with a sufide ion (or equivalent thereof), followed by oxidation of the sulfide species to a sulfonic acid group. Optionally, displacement of the displaceable halide with cyanide, followed by hydrolysis of the cyano group, can afford a carboxylic acid cation exchange group. An anion exchange group such as, for example, a quaternary ammonium salt, can be introduced to an aromatic ring with a displaceable halide by displacing the halide with a suitable tertiary amine. Suitable tertiary amines include trialkyl amines such as, for example, triethylamine, trimethylamine, and N,N-diisopropylethylamine, and aromatic tertiary amines such as, for example, pyridine and N-methylimidazole. A general explanation of substitution and displacement reactions can be found in March, "Advanced Organic Chemistry" (Wiley-Interscience 1985).

Preferably, the cation exchange group of the present inventive method is a sulfonic acid group. In a preferred embodiment, the sulfonic acid group is introduced to the aromatic ring via chlorosulfonation of the aromatic ring, followed by hydrolysis of the resulting chlorosulfonium species. The anion exchange group is preferably an ammonium species, particularly a quaternary ammonium salt. In a preferred embodiment, the ammonium species is introduced to the aromatic ring via displacement of a benzylic displaceable halide with a tertiary amine. In a more preferred embodiment, the tertiary amine is a trialkylamine, particularly triethylamine.

The present invention further provides a method of preparing an ion exchange membrane comprising contacting an integrally reinforced polymeric film with an aromatic monomer having an aromatic ring, which aromatic ring is substituted with an ion exchange group, and subjecting the integrally reinforced polymeric film to conditions wherein the ionophoric aromatic monomer undergoes graft bonding to the integrally reinforced polymeric film. In this method, the aromatic monomer is ionophoric in that the aromatic ring is substituted with an ion exchange group. Consequently, the step of introducing an ion exchange group is not necessary to provide an ion exchange membrane. However, if desired, an additional ion exchange group may be introduced to the aromatic ring of the ion exchange membrane prepared by the present inventive method using any suitable method for introducing additional ion exchange groups to substituted aromatic rings, including electrophilic substitution methods and displacement methods, such as those described herein.

The integrally reinforced polymeric film can be derived from any suitable material, including such suitable materials as described herein with respect to the discussion of the present inventive ion exchange membrane. The integrally reinforced polymeric film can be reinforced by any suitable means, such as those described herein. In a preferred embodiment, the integrally reinforced polymeric film of the present inventive method is an integrally fiber reinforced film. In one preferred embodiment of the present invention, the integrally fiber reinforced polymeric film is an integrally fiber reinforced PTFE film, which is preferably an aromatic polyamide woven fiber reinforced PTFE cast film. In another preferred embodiment, the integrally fiber reinforced polymeric film is an integrally fiber reinforced FEP film. Preferred integrally fiber reinforced FEP films include, for example, PTFE woven fiber reinforced FEP cast films, poly(1,3-phenyleneisophthalamide) woven fiber reinforced FEP films, and poly(1,4-phenyleneterephthalamide)/poly(1,3-phenyleneisophthalamide) blended woven fiber reinforced FEP films. In yet another preferred embodiment, the fiber reinforced polymeric film is a carbon nonwoven fiber reinforced FEP film.

The aromatic monomer can be any suitable aromatic monomer which can be grafted to the polymeric film and which possesses an aromatic ring substituted with an ion exchange group. The aromatic ring can be any carbocyclic or heterocyclic ring or ring system having aromaticity as described herein. Suitable aromatic rings include carbocyclic aromatic rings such as, for example, benzene, naphthalene, anthracene, biphenyl, biphenyl ether, biphenylsulfone, and heterocyclic aromatic rings (e.g., oxazole, thiazole, thiophene, pyridine, benzothiazole, quinoline, and the like). The aromatic ring preferably is a carbocyclic aromatic ring, particularly a benzene ring. The ion exchange group can be any suitable ion exchange group as described herein and, as previously discussed, renders the aromatic monomer ionophoric.

The ionophoric aromatic monomer preferably is a vinylaryl monomer having the formula: 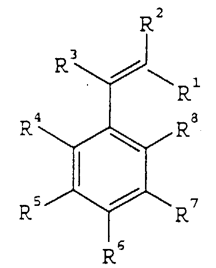 wherein (a) R¹, R², and R³ may be the same or different and each may be H, C₁-C₃ alkyl, or F; (b) R⁴, R⁵, R⁶, R⁷, and R⁸ may be the same or different and each may be H, Br, Cl, F, NO₂, C₁-C₆ alkyl or fluoroalkyl, aryl, cyano, thio, hydroxy, alkoxy, aryloxy, or amino; and (c) at least one of the substituents R⁴, R⁵, R⁶, R⁷, or R⁸ is an ion exchange group having the formula -(CH₂)ₙA, wherein n is an integer from 0 to 3, and A is CO₂R⁹, SO₃R⁹, B(OR⁹)₂, P(O)(OH)₂, or N⁺ (R¹⁰) (R¹¹) (R¹²), wherein R⁹ is sodium, hydrogen, or alkyl and R¹⁰, R¹¹, and R¹² may be the same or different and each are H, C₁-C₆ alkyl, or aryl. In one preferred embodiment, R¹, R², and R³ are all H. In another preferred embodiment, R³ is CH₃ when R¹=R²=H. In another preferred embodiment, R¹ or R² is CH₃ when R³=H. In yet another preferred embodiment, R¹, R², and R³ are all F.

The ionophoric aromatic monomer to be utilized in the present inventive method can be obtained commercially or by any suitable synthetic method. Examples of suitable ionophoric aromatic monomers which are commercially available include monomers such as, for example, styrenesulfonic acid, sodium salt and vinylbenzoic acid.

After contacting the integrally reinforced polymeric film with the ionophoric monomer, the integrally reinforced polymeric film is subjected to conditions wherein the ionophoric aromatic monomer undergoes graft bonding with the integrally reinforced polymeric film. Suitable conditions for grafting the aromatic monomer to the integrally reinforced polymeric film include any number of grafting conditions, including such grafting conditions as described herein. Preferably, the grafting conditions of the present inventive method involve grafting by radiation, which is more preferably gamma radiation. Any suitable radiation intensity, reaction temperature, and reaction time are within the scope of the present inventive method and include such radiation intensities, reaction temperatures, and reaction times as described herein.

With respect to any of the methods of preparing the present inventive ion exchange membrane, the methods can involve batch or continuous processes. Similarly, the ion exchange membranes can be formed in discrete pieces or rolls. In preparing large membrane lengths, particularly rolls, it is desirable to ensure that the entire length of the integrally reinforced polymeric film is homogenously or similarly treated with the aromatic monomer, e.g., by utilizing suitable equipment, supports, and spacers as needed.

The present invention further provides a method for treating a fluid wherein a fluid is contacted with the ion exchange membrane of the present invention. Any suitable treatment method is within the scope of the present inventive method for treating a fluid, such as, for example, a permselective ion barrier in the treatment of electrolytic solutions used in chlor-alkali production, or in applications directed to water desalination. Depending upon the particular application, the present inventive method for treatment of a fluid can be used to deplete ions in a fluid or to concentrate ions in a fluid.

For example, in one embodiment of the present inventive method for treating a fluid, the cation exchange membrane of the present invention can be utilized as a permselective cathode compartment barrier for an electrolytic cell used in alkali metal hydroxide production such as, for example, sodium hydroxide production, wherein an aqueous sodium chloride solution is contacted with the membrane of the present invention, which membrane allows the positively charged sodium ions to pass through and react electolytically with the cathode, while forming a barrier excluding the negatively charged chloride ions. In this embodiment, the sodium ions in the sodium chloride solution are thereby depleted. Consequently, the exclusion of chloride ions results in the concentration of chloride ions in the sodium chloride solution.

In another embodiment of the present inventive method for treating a fluid, the anion exchange membrane of the present invention can be used as a permselective anode compartment barrier for an electrolytic cell used in chlorine production, wherein an aqueous sodium chloride solution is contacted with the membrane of the present invention, which membrane allows the negatively charged chloride to pass through and react electolytically with the anode, while excluding the positively charged sodium ions. In this embodiment, the chloride ions in the sodium chloride solution are thereby depleted, while the exclusion of sodium ions results in the concentration of sodium ions in the sodium chloride solution.

In one preferred embodiment, the present inventive method for treating a fluid utilizes a cation exchange membrane comprising an integrally reinforced polymeric film grafted with an organic moiety having a benzene ring substituted with a sulfonic acid group. In another preferred embodiment, the present inventive method for treating a fluid utilizes an anion exchange membrane comprising an integrally reinforced polymeric film grafted with an organic moiety having a benzene ring substituted with a quaternary ammonium group.

The present invention also provides an ion exchange device comprising a housing and an ion exchange membrane of the present invention. Preferably, the ion exchange device is an electrodialysis device, which electrodialysis device can be used in the present inventive method for treating a fluid. The present inventive ion exchange device typically includes a housing which supports the filter unit. The housing can include, for example, any suitable assembly, frame, cartridge, bracket, container, or adapter in operative relationship with at least one ion exchange membrane of the present invention, which can be a cation exchange membrane or an anion exchange membrane.

The ion exchange device of the present invention can utilize a multiplicity of ion exchange membranes of the present invention. These ion exchange membranes can be arranged in any suitable configuration such as, for example, a series of superimposed membranes. The individual ion exchange membranes can be cation exchange membranes, anion exchange membranes, or any suitable combination of both cation and anion exchange membranes arranged in any suitable order. For example, the ion exchange device can employ a plurality of alternating anion and cation exchange membranes of the present invention layered in a fashion whereby each cation exchange membrane is sandwiched between alternating anion exchange membranes. If desired, the ion exchange device can employ a single bipolar membrane system, wherein one anion exchange membrane of the present invention is superimposed upon one cation exchange membrane of the present invention.

In a multiple-layer embodiment of the present inventive ion exchange device, the individual membrane layers can be held together by any suitable means such as, for example, thermal fusion, bonding together by pretreatment with a binding agent, or any suitable method known in the art (e.g., for the preparation of bipolar membranes which involves bonding and/or laminating ion exchange membranes).

The following examples further illustrate the present invention but, of course, should not be construed as in any way limiting its scope.

### EXAMPLE 1

This example illustrates a method for preparing a cation exchange membrane of the present invention.

A sample of substantially non-porous poly(1,4-phenyleneterephthalamide) woven fiber reinforced PTFE film of 130 µm (5 mil) thickness was immersed in a reaction vessel charged with a solution of styrene (22% by weight in methylene chloride). The vessel was sealed and irradiated using gamma radiation at an intensity of about 7,000 rad/hr, for 160 hours at ambient temperature. The sample was then removed from the vessel, washed with methylene chloride, and placed in a reaction vessel containing a solution of chlorosulfonic acid (3% by weight in methylene chloride) for 1.25 hours at ambient temperature. The sample was removed from the vessel, immersed in boiling water (100 °C) for 15-20 minutes, and then rinsed with water at ambient temperature. The resulting cation exchange membrane was dried at 49 °C for 15-20 minutes.

The properties of the dried membrane were determined and are recited in Table 1.

**Table 1**

| | |
|---|---|
| Resistance in 0.6 N KCl (mohm-in²) [mohm-cm²] | 870 [5600] |
| Thickness (mil) [µm] | 22 [560] |
| % Expansion in Water (length) | 0 |
| % Expansion in Water (width) | 0 |
| % Gel Water Content | 50 |
| Ion Exchange Capacity (meq/g) | 0.87 |
| Tensile Strength - Length (lb/in) [kN/m] | >40 [>70] |
| Tensile Strength - Width (lb/in) [kN/m] | >40 [>70] |
| % Elongation - Length | 16 |
| % Elongation - Width | 16 |

### EXAMPLE 2

This example illustrates a method for preparing an anion exchange membrane of the present invention.

A sample of substantially non-porous poly(1,4-phenyleneterephthalamide) woven fiber reinforced PTFE film of 130 µm (5 mil) thickness was immersed in a reaction vessel charged with a solution of 4-vinyl benzyl chloride (35% by weight in methylene chloride). The vessel was sealed and irradiated using gamma radiation at an intensity of about 7,000 rad/hr, for 140 hours at ambient temperature. The sample was then removed from the vessel, washed with methylene chloride, and placed in a reaction vessel containing a solution of triethylamine (30% by weight in methylene chloride) for 5 days at ambient temperature. The sample was removed from the vessel, immersed in boiling water (100 °C) for 30-40 minutes, and then rinsed with water at ambient temperature. The resulting anion exchange membrane was dried at a temperature of 55 °C for 15-20 minutes.

The properties of the dried membrane were determined and are recited in Table 2.

**Table 2**

| | |
|---|---|
| Resistance in 0.6 N KCl (mohm-in²) [mohm-cm²] | 940 [6100] |
| Thickness (mil) [µm] | 13 [330] |
| % Expansion in Water (length) | 0 |
| % Expansion in Water (width) | 0 |
| % Gel Water Content | 46 |
| Ion Exchange Capacity (meq/g) | 0.7 |
| Tensile Strength - Length (lb/in) [kN/m] | >40 [>70] |
| Tensile Strength - Width (lb/in) [kN/m] | >40 [>70] |
| % Elongation - Length | 17 |
| % Elongation - Width | 17 |

### EXAMPLE 3

This example illustrates the stability of an anion exchange membrane of the present invention in an aqueous acid.

The anion exchange membrane prepared in Example 2 was placed in 15% (by weight) aqueous H₂SO₄ at various temperatures for various periods of times. The dimensional stability of the anion exchange membrane was measured by the percent expansion of the membrane after treatment. The oxidative stability of the anion exchange membrane was measured by the percent change in weight of the membrane.

The stability data obtained with respect to the anion exchange membrane of Example 2 are recited in Table 3.

**Table 3**

| Exposure Time | 1 Week | | 4 Weeks | | 6 Weeks | |
|---|---|---|---|---|---|---|
| Exposure Temperature | 25°C | 60°C | 25°C | 60°C | 25°C | 60°C |
| % Expansion - Length | 0 | 0 | 0 | 0 | 0 | 0 |
| % Expansion - Width | 0 | 0 | 0 | 0 | 0 | 0 |
| % Weight Change | +1.6 | +1.4 | +0.6 | -2.1 | +2.2 | +0.2 |

These data demonstrate that the anion exchange membrane of the present invention maintains dimensional and oxidative stability even after prolonged exposure to acidic conditions. There was no significant change in dimension or weight after 6 weeks of exposure to acidic conditions at 60 °C.

### EXAMPLE 4

This example illustrates the stability of an anion exchange membrane of the present invention in an aqueous base.

The anion exchange membrane prepared in Example 2 was placed in 20% (by weight) aqueous NaOH at various temperatures for various periods of times. The dimensional stability of the anion exchange membrane was measured by the percent expansion of the membrane after treatment. The oxidative stability of the anion exchange membrane was measured by the percent change in weight of the membrane.

The stability data obtained with respect to the anion exchange membrane of Example 2 are recited in Table 4.

**Table 4**

| Exposure Time Exposure Temperature | 1 Week | | 2 Weeks | | 4 Weeks | | 6 Weeks | |
|---|---|---|---|---|---|---|---|---|
| | 25°C | 60°C | 25°C | 60°C | 25°C | 60°C | 25°C | 60°C |
| % Expansion - | 0 | 0 | 0 | 0 | 0 | 0 | 0 | 0 |
| Length | | | | | | | | |
| % Expansion - | 0 | 0 | 0 | 0 | 0 | 0 | 0 | 0 |
| Width | | | | | | | | |
| % Weight Change | +0.5 | -0.2 | +3.2 | +0.7 | -- | -5.0 | +1.2 | -6.1 |

These data demonstrate that the anion exchange membrane of the present invention maintains dimensional and oxidative stability even after prolonged exposure to alkaline conditions. There was no significant change in dimension or weight after 6 weeks of exposure to alkaline conditions at 60 °C.

### EXAMPLE 5

This example compares the stability of the anion exchange membrane of Example 2 with that of two known anion exchange membranes in a side-by-side accelerated stability test. In this example, the membrane of Example 2, an anion exchange membrane marketed by Tokuyuma Soda under the trademark Neosepta AM-3, and an anion exchange membrane marketed by Asahi Glass Co. under the trademark Selemion AMV were placed in refluxing 20% (by weight) NaOH for 10 hours. The resulting membranes were tested for percent weight change and percent decrease in tensile strength. The test results are recited in Table 5.

**Table 5**

| Membrane | Percent Weight Change | Percent Change in Tensile Strength (lb/in) [kN/m] |
|---|---|---|
| Example 2 | +0.5 | 0 [0] |
| Neosepta AM-3 | -18.5 | -67 [-117] |
| Selemion AMV | -11.8 | -31 [-54] |

These data demonstrate that the anion exchange membrane of the present invention maintains stability even under accelerated degradation conditions. The oxidative stability of the present inventive membrane of Example 2 is superior to that of the tested conventional membranes. The present inventive membrane showed little change after the challenge, whereas the tested conventional membranes lost 1/10 to 2/10 of their weight. The tensile strength of the present inventive membrane of Example 2 is superior to the tested conventional membranes as well. The present inventive membrane showed no change after the challenge, whereas the tested conventional membranes lost 1/3 to 2/3 of their tensile strengths.

All of the references cited herein, including patents and publications, are hereby incorporated in their entireties by reference.

While particular embodiments of the invention have been shown, it will of course be understood that the invention is not limited thereto since modifications may be made by those skilled in the art, particularly in light of the foregoing teachings. It is, therefore, contemplated by the appended claims to cover any such modifications as incorporate those features which constitute the essential features of these improvements within the true spirit and scope of the invention.

## Claims

1. An ion exchange membrane comprising an integrally reinforced polymeric film grafted with an aromatic moiety, said aromatic moiety comprising an aromatic ring substituted with an ion exchange group.

2. The ion exchange membrane of claim 1, wherein said integrally reinforced polymeric film comprises a fiber reinforced polymer selected from the group consisting of integrally fiber reinforced polytetrafluoroethylene, integrally fiber reinforced poly(fluoroethylene-propylene), and polytetrafluoroethylene woven fiber reinforced poly(fluoroethylene-propylene) cast film.

3. The ion exchange membrane of claim 1 or 2, wherein said integrally reinforced polymeric film is an aromatic polyamide woven fiber reinforced polytetrafluoroethylene cast film, a carbon non-woven fiber reinforced poly(fluoroethylene-propylene) film, a poly(1,3-phenyleneisophthalamide) woven fiber reinforced poly(fluoroethylene-propylene) film, or a poly(1,4-phenyleneterephthalamide)/poly(1,3-phenyleneisophthalamide)-blended woven fiber reinforced poly(fluoroethylene-propylene) film.

4. The ion exchange membrane of any of claims 1-3, wherein said aromatic ring is a benzene ring.

5. The ion exchange membrane of any of claims 1-4, wherein said ion exchange group is a cation exchange group.

6. The ion exchange membrane of claim 5, wherein said cation exchange group is a sulfonic acid, a carboxylic acid, a phosphonic acid, or a derivative thereof.

7. The ion exchange membrane of any of claims 1-3, wherein said ion exchange group is an anion exchange group.

8. The ion exchange membrane of claim 7, wherein said anion exchange group is an ammonium species.

9. The ion exchange membrane of claim 7 or 8, wherein said anion exchange group is a quaternary ammonium salt.

10. A method for preparing an ion exchange membrane comprising:
(a) providing an integrally reinforced polymeric film;
(b) contacting said integrally reinforced polymeric film with an aromatic monomer, said aromatic monomer comprising an aromatic ring;
(c) subjecting said integrally reinforced polymeric film to conditions wherein said aromatic monomer forms a graft with said integrally reinforced polymeric film; and
(d) introducing an ion exchange group to said aromatic ring to provide an ion exchange membrane.

11. The method of claim 10, wherein said integrally reinforced polymeric film comprises a fiber reinforced polymer selected from the group consisting of integrally fiber reinforced polytetrafluoroethylene, integrally fiber reinforced poly(fluoroethylene-propylene), and polytetrafluoroethylene integrally woven fiber reinforced poly(fluoroethylene-propylene) cast film.

12. The method of claim 10 or 11, wherein said integrally reinforced polymeric film is a poly(1,4-phenyleneterephthalamide) integrally woven fiber reinforced polytetrafluoroethylene cast film, carbon integrally non-woven fiber reinforced poly(fluoroethylene-propylene) film, poly(1,3-phenyleneisophthalamide) integrally woven fiber reinforced poly(fluoroethylene-propylene) film, or poly(1,4-phenyleneterephthalamide)/poly(1,3-phenyleneisophthalamide)-blended integrally woven fiber reinforced poly(fluoroethylene-propylene) film.

13. The method of any of claims 10-12, wherein said aromatic monomer is selected from the group consisting of styrene, trifluorostyrene, α-methylstyrene, trans-β-methylstyrene, divinyl benzene, 2-vinylnaphthalene, and vinyl benzyl halide.

14. The method of any of claims 10-12, wherein said ion exchange group is a sulfonic acid or an ammomium species.

15. The method of claim 17, wherein said conditions comprise exposure to radiation selected from the group consist of gamma radiation, ultraviolet radiation, and electron-beam radiation.

16. A method for preparing an ion exchange membrane comprising:
(a) providing an integrally reinforced polymeric film;
(b) contacting said integrally reinforced polymeric film with an aromatic monomer, said aromatic monomer comprising an aromatic ring substituted with an ion exchange group; and
(c) subjecting said integrally reinforced polymeric film to conditions wherein said aromatic monomer forms a graft with said integrally reinforced polymeric film.

17. A method for treating a fluid comprising contacting a fluid with the ion exchange membrane of any of claims 1-9.

18. An electrodialysis device comprising a housing and the ion exchange membrane of any of claims 1-9.

19. An ion exchange device comprising two or more ion exchange membranes, which can be the same or different, of any of claims 1-9.
